# EUROPEAN PATENT APPLICATION

(11) **EP 4 746 495 A1**
(43) Date of publication of application: **20.05.2026**
(21) Application number: 23944666.9
(22) Date of filing: 12.07.2023
(51) Int. Cl.: H04W 24/04, H04L 67/125, H04W 4/70, H04W 4/80

(54) **COMMUNICATION METHOD, TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Stöckeler, Ferdinand
(86) International application number: PCT/CN2023/106912
(87) International publication number: WO 2025/010644

(57) **Abstract**

Provided in the embodiments of the present disclosure are a communication method, a terminal, a network device, a communication system and a storage medium. The method comprises: receiving a first instruction from a network device, wherein the first instruction is used for instructing a terminal to perform at least one of the following: information reporting, and operation execution, and the terminal is of an ambient IoT type. By means of the technical solution provided in the embodiments of the present disclosure, effective and reliable communication can be realized between a terminal and a network device.

## Description

### TECHNICAL FIELD

The disclosure relates to the field of wireless communication technologies, and in particular to a communication method, a terminal, a network device, a communication system, and a storage medium.

### BACKGROUND

Ambient Internet of Things (IoT) technology is a hot topic in the field of communication technology. In ambient IoT, compared with narrowband IoT, IoT terminals (also called as ambient IoT terminals) may obtain energy from outside, thus having lower complexity and cost. Therefore, the communication technology such as the ambient IoT may be applied in many scenarios.

### SUMMARY

In a communication scenario, especially in communication between a low-power terminal and a network side, effective and reliable communication between the terminal and the network side is the most important.

According to a first aspect of embodiments of the disclosure, a communication method is provided. The method includes: receiving a first instruction, in which the first instruction is configured to instruct a terminal to perform at least one of: sending information, or performing a first operation. The terminal is of ambient Internet of Things (IoT) type.

According to a second aspect of embodiments of the disclosure, a communication method is provided. The method includes: sending a first instruction, in which the first instruction is configured to instruct a terminal to perform at least one of: sending information reporting, or performing a first operation. The terminal is of ambient IoT type.

According to a third aspect of embodiments of the disclosure, a terminal is provided. The terminal includes: a receiving module, configured to receive a first instruction, in which the first instruction is configured to instruct a terminal to perform at least one of: sending information, or performing a first operation. The terminal is of ambient IoT type.

According to a fourth aspect of embodiments of the disclosure, a network device is provided. The network device includes: a sending module, configured to send a first instruction, in which the first instruction is configured to instruct a terminal to perform at least one of: sending information reporting, or performing a first operation. The terminal is of ambient IoT type.

According to a fifth aspect of embodiments of the disclosure, a terminal is provided. The terminal includes: at least one processor, in which the terminal is configured to implement the method as described in the first aspect.

According to a sixth aspect of embodiments of the disclosure, a network device is provided. The network device includes: at least one processor, in which the network device is configured to implement the method as described in the second aspect.

According to a seventh aspect of embodiments of the disclosure, a communication system is provided. The communication system includes: a terminal and a network device, in which the terminal is configured to perform the method as described in the first aspect, and the network device is configured to perform the method as described in the second aspect.

According to an eighth aspect of embodiments of the disclosure, a storage medium is provided. The storage medium stores instructions that, when executed by a processor, cause the method as described in the first aspect or the second aspect to be implemented.

According to a ninth aspect of embodiments of the present disclosure, a computer program or a computer program product is provided. The computer program or the computer program product includes codes. When instructions are executed by a processor, the method as described in the first aspect or the second aspect is implemented.

According to the communication technology of embodiments of the present disclosure, the terminal and the network side may perform effective and reliable communication.

It is noted that the above general description and the following detailed description are merely illustrative and explanatory, which do not constitute a limitation on embodiments of the present disclosure.

### BRIEF DESCRIPTION OF THE DRAWINGS

The accompanying drawings, which are incorporated in and constitute a part of the description, illustrate embodiments consistent with the present disclosure and serve to explain the principles of embodiments of the present disclosure together with the description.
FIG. 1 is a schematic diagram illustrating an architecture of a communication system according to an embodiment of the disclosure.
FIG. 2A is a schematic diagram illustrating an interaction example of a communication method according to an embodiment of the disclosure.
FIG. 2B is a schematic diagram illustrating an interaction example of a communication method according to an embodiment of the disclosure.
FIG. 2C is a schematic diagram illustrating an interaction example of a communication method according to an embodiment of the disclosure.
FIG. 3A is a schematic diagram illustrating an interaction example of a communication method according to an embodiment of the disclosure.
FIG. 3B is a schematic diagram illustrating an interaction example of a communication method according to an embodiment of the disclosure.
FIG. 4A is a schematic diagram illustrating an interaction example of a communication method according to an embodiment of the disclosure.
FIG. 4B is a schematic diagram illustrating an interaction example of a communication method according to an embodiment of the disclosure.
FIG. 5A is a flowchart illustrating an example of a communication method according to an embodiment of the disclosure.
FIG. 5B is a flowchart illustrating an example of a communication method according to an embodiment of the disclosure.
FIG. 5C is a flowchart illustrating an example of a communication method according to an embodiment of the disclosure.
FIG. 6A is a flowchart illustrating an example of a communication method according to an embodiment of the disclosure.
FIG. 6B is a flowchart illustrating an example of a communication method according to an embodiment of the disclosure.
FIG. 6C is a flowchart illustrating an example of a communication method according to an embodiment of the disclosure.
FIG. 7 is a schematic diagram illustrating an interaction example of a communication method according to an embodiment of the disclosure.
FIG. 8 is a schematic diagram illustrating a structure example of a communication apparatus according to an embodiment of the disclosure.
FIG. 9 is a schematic diagram illustrating a structure example of a communication apparatus according to an embodiment of the disclosure.
FIG. 10 is a schematic diagram illustrating a structure example of a communication device according to an embodiment of the disclosure.

### DETAILED DESCRIPTION

Embodiments of the disclosure provide a communication method, a terminal, a network device, a communication system, and a storage medium.

In a first aspect, embodiments of the disclosure provide a communication method. The method includes: receiving a first instruction, in which the first instruction is configured to instruct a terminal to perform at least one of: sending information, or performing a first operation. The terminal is of ambient Internet of Things (IoT) type.

According to an embodiment of the present disclosure, the network device may send the first instruction to the terminal. Thus, the network device may instruct the terminal of the ambient IoT type to report the information or perform the first operation by means of the first instruction. In this way, the network device and an ambient IoT terminal may communicate with each other to achieve desired functions.

In combination with some embodiments of the first aspect, in some embodiments, after receiving the first instruction, the method further includes: sending first information according to the first instruction, in which the first information includes at least one of: identification information or service data of the terminal, the identification information is configured to identify the terminal, and the service data is data acquired by the terminal.

According to an embodiment of the present disclosure, the first information may include the identification information and/or the service data. The terminal may report the identification information and/or the service data to a network device. In this way, the network device may obtain the identification information and/or the service data reported by the terminal by sending the first instruction.

In addition, the first information may include both the identification information and the service data, which means that the terminal sends both the identification information and the service data to the network device. In this way, steps in a communication procedure may be reduced, and a communication duration may be shortened and a communication efficiency may be improved.

In combination with some embodiments of the first aspect, in some embodiments, sending the first information according to the first instruction includes: repeatedly sending the first information according to the first instruction.

According to an embodiment of the present disclosure, the terminal may repeatedly send the first information to the network device in response to the first instruction, which may ensure that the first information sent by the terminal is received by the network device by repeatedly sending the first information.

In combination with some embodiments of the first aspect, in some embodiments, repeatedly sending the first information is performed by at least one of: repeatedly sending in a plurality of time domain channels; repeatedly sending in a plurality of frequency domain channels; or repeatedly sending in a plurality of code domain channels, which may enhance reliability of communication.

According to an embodiment of the present disclosure, the terminal may repeatedly send the first information in the plurality of time domain channels, the plurality of frequency domain channels, or the plurality of code domain channels. In this way, reporting of the first information may be guaranteed in a case of a conflict in some certain time domain, frequency domain, or code domain channels, which may enhance the reliability of communication.

In combination with some embodiments of the first aspect, in some embodiments, a plurality of first instructions are received. Sending the first information according to the first instruction may include: sending the first information at least once according to the plurality of first instructions.

According to an embodiment of the present disclosure, the network device may send the plurality of first instructions to the terminal, and the terminal may send the first information once or more than once for the plurality of first instructions. In this way, it may be ensured that the terminal receives the first instruction and the network device receives the first information, and the reliability of communication may be improved.

In combination with some embodiments of the first aspect, in some embodiments, after sending the first information according to the first instruction, the method further includes: receiving a second instruction, in which the second instruction indicates that the first information is successfully received.

According to an embodiment of the present disclosure, the network device may inform the first terminal of successful reception of the first information by means of the second instruction. In this way, the terminal may clearly know that the first information is received by the network device, and then determine that one communication procedure is completed. In this way, successful completion of the communication procedure may be ensured, and the reliability of communication may be improved.

In combination with some embodiments of the first aspect, in some embodiments, after receiving the second instruction, the method further includes: sending second information, in which the second information includes the service data of the terminal, and the service data is the data acquired by the terminal.

According to an embodiment of the present disclosure, the second information may be sent separately from the first information. In this way, the identification information and the service data of the terminal may be reported separately. In this way, when a size of a resource pool and the number of terminals remain unchanged, a probability of resource conflict may be reduced, and the reliability of communication may be improved.

In combination with some embodiments of the first aspect, in some embodiments, transmission of the second instruction and transmission of the first instruction may be performed via the same channel.

According to an embodiment of the present disclosure, when the terminal has received the first instruction and the network device has received the first information, the network device may determine that a channel occupied by the first instruction is available. Then, when sending the second instruction, the network device may select to use the same channel as sending the first instruction to send the second instruction. In this way, it is possible to avoid the resource conflict that may exist when using another channel, and the reliability of communication may be improved.

In combination with some embodiments of the first aspect, in some embodiments, the first instruction may be configured to instruct the terminal to perform an operation. After receiving the first instruction, the method further includes: performing the first operation according to the first instruction.

According to an embodiment of the present disclosure, the terminal may perform the first operation under an action of the first instruction. In this way, the network device may control the terminal to perform the corresponding operation by sending the first instruction, thus realizing the corresponding function on the terminal.

In combination with some embodiments of the first aspect, in some embodiments, the first operation may include at least one of: data writing, data deleting, or data modifying.

According to an embodiment of the present disclosure, the terminal may perform, based on the first instruction, data operations such as the data writing, the data deleting, or the data modifying, etc. locally. In this way, the network device may maintain data on the terminal.

In combination with some embodiments of the first aspect, in some embodiments, after performing the first operation according to the first instruction, the method further includes: sending third information, in which the third information indicates an execution result of the first operation.

According to an embodiment of the present disclosure, the terminal may report the execution result of the first operation to the network device by sending the third information, so that the network device obtains and uses the execution result.

In combination with some embodiments of the first aspect, in some embodiments, after sending the third information, the method further includes: receiving a second instruction, in which the second instruction indicates that the third information is successfully received.

According to an embodiment of the present disclosure, the network device may inform the first terminal of successful reception of the third information by means of the second instruction. In this way, the terminal may clearly know that the third information is received by the network device, and then determine that one communication procedure is completed. In this way, successful completion of the communication procedure may be ensured, and the reliability of communication may be improved.

In combination with some embodiments of the first aspect, in some embodiments, the first instruction includes fourth information, and the fourth information includes an index for an interaction between the terminal and a network device. After receiving the second instruction, the terminal does not respond to another first instruction with an index having the same value as the index for the first instruction within a first time period.

According to an embodiment of the present disclosure, the fourth information includes the index for the interaction between the terminal and the network device, thus indexing an interaction procedure. The fourth information corresponding to one complete interaction has the same value. In this way, by adding the fourth information to the first instruction, the terminal may determine which communication procedure between the network device and the terminal the received first instruction is for, conflicts between different communication procedures may be avoided, and the reliability of communication may be improved.

In addition, after receiving another first instruction, if the fourth information has the same value in the two first instructions, it means that the two first instructions are for the same communication procedure. After receiving the second instruction, the terminal may determine that the communication procedure corresponding to the fourth information with the value has ended. In this case, even if the above-mentioned another first instruction is received, the terminal no longer responds either. In this way, on the one hand, waste of resources caused by repeated communication may be avoided, and on the other hand, the conflict with other communication procedures may be avoided, that is, the communication efficiency is guaranteed and the reliability of communication is improved.

In combination with some embodiments of the first aspect, in some embodiments, the first instruction may include fourth information, and the fourth information includes an index for an interaction between the terminal and a network device.

According to an embodiment of the present disclosure, the fourth information is the index for the interaction between the terminal and the network device, thus indexing the interaction procedure. One complete interaction corresponds to the same index value. In this way, by adding the fourth information to the first instruction, the terminal may determine which communication procedure between the network device and the terminal the received first instruction is for, conflicts between different communication procedures may be avoided, and the reliability of communication may be improved.

In a second aspect, embodiments of the disclosure provide a communication method. The method includes: sending a first instruction, in which the first instruction is configured to instruct a terminal to perform at least one of: sending information reporting, or performing a first operation. The terminal is of ambient IoT type.

In combination with some embodiments of the second aspect, in some embodiments, after sending the first instruction, the method further includes: receiving first information, in which the first information includes at least one of: identification information or service data of the terminal, the identification information is configured to identify the terminal, and the service data is data acquired by the terminal.

In combination with some embodiments of the second aspect, in some embodiments, receiving the first information includes: receiving repeatedly sent first information.

In combination with some embodiments of the second aspect, in some embodiments, receiving the first information is performed by at least one of: repeatedly receiving in a plurality of time domain channels; repeatedly receiving in a plurality of frequency domain channels; or repeatedly receiving in a plurality of code domain channels.

In combination with some embodiments of the second aspect, in some embodiments, a plurality of first instructions are sent. Receiving the first information from the terminal may include: receiving the first information sent at least once.

In combination with some embodiments of the second aspect, in some embodiments, after receiving the first information, the method may further include: sending a second instruction, in which the second instruction indicates that the first information is successfully received.

In combination with some embodiments of the second aspect, in some embodiments, after sending the second instruction, the method may further include: receiving second information, in which the second information may include the service data of the terminal, and the service data is the data acquired by the terminal.

In combination with some embodiments of the second aspect, in some embodiments, transmission of the second instruction and transmission of the first instruction may be performed via the same channel.

In combination with some embodiments of the second aspect, in some embodiments, after sending the first instruction, the method may further include: receiving third information, in which the third information indicates an execution result of the first operation.

In combination with some embodiments of the second aspect, in some embodiments, after receiving the third information, the method may further include: sending a second instruction, in which the second instruction indicates that the third information is successfully received.

In combination with some embodiments of the second aspect, in some embodiments, the first instruction comprises fourth information, and the fourth information comprises an index for an interaction between the terminal and a network device.

In a third aspect, embodiments of the disclosure provide a terminal. The terminal includes: a receiving module, configured to receive a first instruction, in which the first instruction is configured to instruct a terminal to perform at least one of: sending information, or performing a first operation. The terminal is of ambient IoT type.

In combination with some embodiments of the third aspect, in some embodiments, the terminal may further include a sending module. The sending module is configured to send first information according to the first instruction, in which the first information includes at least one of: identification information or service data of the terminal, the identification information is configured to identify the terminal, and the service data is data acquired by the terminal.

In combination with some embodiments of the third aspect, in some embodiments, the sending module is configured to repeatedly send the first information according to the first instruction.

In combination with some embodiments of the third aspect, in some embodiments, repeatedly sending the first information is performed by at least one of: repeatedly sending in a plurality of time domain channels; repeatedly sending in a plurality of frequency domain channels; or repeatedly sending in a plurality of code domain channels, which may enhance reliability of communication.

In combination with some embodiments of the third aspect, in some embodiments, a plurality of first instructions are received. The sending module is configured to send the first information at least once according to the plurality of first instructions.

In combination with some embodiments of the third aspect, in some embodiments, the receiving module is configured to: receive a second instruction, in which the second instruction indicates that the first information is successfully received.

In combination with some embodiments of the third aspect, in some embodiments, the sending module is configured to send second information, in which the second information includes the service data of the terminal, and the service data is the data acquired by the terminal.

In combination with some embodiments of the third aspect, in some embodiments, transmission of the second instruction and transmission of the first instruction may be performed via the same channel.

In combination with some embodiments of the third aspect, in some embodiments, the terminal may further include a processing module. The processing module is configured to perform the first operation according to the first instruction.

In combination with some embodiments of the third aspect, in some embodiments, the first operation may include at least one of: data writing, data deleting, or data modifying.

In combination with some embodiments of the third aspect, in some embodiments, the sending module may be further configured to: send third information, in which the third information indicates an execution result of the first operation.

In combination with some embodiments of the third aspect, in some embodiments, the receiving module may be further configured to: receive a second instruction, in which the second instruction indicates that the third information is successfully received.

In combination with some embodiments of the third aspect, in some embodiments, the first instruction includes fourth information, and the fourth information includes an index for an interaction between the terminal and a network device. After receiving the second instruction, the terminal does not respond to another first instruction with an index having the same value as the index for the first instruction within a first time period.

In combination with some embodiments of the third aspect, in some embodiments, the first instruction may include fourth information, and the fourth information includes an index for an interaction between the terminal and a network device.

In a fourth aspect, embodiments of the disclosure provide a network device. The network device includes: a sending module, configured to send a first instruction, in which the first instruction is configured to instruct a terminal to perform at least one of: sending information reporting, or performing a first operation. The terminal is of ambient IoT type.

In combination with some embodiments of the fourth aspect, in some embodiments, the network device may further include: a receiving module. The receiving module is configured to: receive first information, in which the first information includes at least one of: identification information or service data of the terminal, the identification information is configured to identify the terminal, and the service data is data acquired by the terminal.

In combination with some embodiments of the fourth aspect, in some embodiments, the receiving module may be configured to: receive repeatedly sent first information.

In combination with some embodiments of the fourth aspect, in some embodiments, receiving the first information is performed by at least one of: repeatedly receiving in a plurality of time domain channels; repeatedly receiving in a plurality of frequency domain channels; or repeatedly receiving in a plurality of code domain channels.

In combination with some embodiments of the fourth aspect, in some embodiments, a plurality of first instructions are sent. The receiving module may be configured to: receive the first information sent at least once.

In combination with some embodiments of the fourth aspect, in some embodiments, the sending module may be configured to send a second instruction, in which the second instruction indicates that the first information is successfully received.

In combination with some embodiments of the fourth aspect, in some embodiments, the receiving module may be configured to receive second information, in which the second information may include the service data of the terminal, and the service data is the data acquired by the terminal.

In combination with some embodiments of the fourth aspect, in some embodiments, transmission of the second instruction and transmission of the first instruction may be performed via the same channel.

In combination with some embodiments of the fourth aspect, in some embodiments, the receiving module may be configured to receive third information, in which the third information indicates an execution result of the first operation.

In combination with some embodiments of the fourth aspect, in some embodiments, the sending module may be configured to send a second instruction, in which the second instruction indicates that the third information is successfully received.

In combination with some embodiments of the fourth aspect, in some embodiments, the first instruction comprises fourth information, and the fourth information comprises an index for an interaction between the terminal and a network device.

In a fifth aspect, embodiments of the disclosure provide a terminal. The terminal includes at least one processor. The terminal is configured to implement the method as described in any one of the first aspect and its embodiments.

In a sixth aspect, embodiments of the disclosure provide a network device. The network device includes at least one processor. The network device is configured to implement the method as described in any one of the second aspect and its embodiments.

In a seventh aspect, embodiments of the disclosure provide a communication system. The communication system includes: a terminal and a network device. The terminal is configured to perform the method as described in any one of the first aspect and its embodiments, and the network device is configured to implement the method as described in any one of the second aspect and its embodiments.

In an eighth aspect, embodiments of the disclosure provide a storage medium. The storage medium stores instructions that, when executed by a processor, cause the method as described in any one of the first aspect, the second aspect and their embodiments to be implemented.

In a ninth aspect, embodiments of the disclosure provide a computer program or a computer program product. The computer program or the computer program product includes codes. When instructions are executed by a processor, the method as described in any one of the first aspect, the second aspect and their embodiments is implemented.

It may be understood that the communication apparatus, the communication device, the communication system, the storage medium, the program product, and the computer program are all used to implement the method in embodiments of the disclosure. Thus, regarding beneficial effects they may achieve, reference may made be to the beneficial effects in the corresponding methods, which may not be repeated herein.

Embodiments of the disclosure provide a communication method, a terminal, a network device, a communication system, and a storage medium. In some embodiments, terms such as "management method", "communication method", "information processing method" and "information transmission method" may be used interchangeably, terms such as "communication apparatus", "information processing apparatus", and "information transmission apparatus" may be used interchangeably, and terms such as "information processing system" and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one selected from A and B for execution (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one selected from A and B for execution (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity, or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the terms such as "in response to...", "in response to determining...", "in a case of/that...", "when", "upon...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and the device may be interpreted as physical or virtual, and their names are not limited to the names recorded in embodiments. In some cases, the apparatus and the device may also be understood as "equipment", "device", "circuit", "network element", "node", "function", "unit", "section", "system", "network", "chip", "chip system", "entity", and "subject".

In some embodiments, the term such as "network" may be interpreted as an apparatus (e.g., an access network device, a core network device, etc.) included in the network.

In some embodiments, "access network device (AN device)" may be referred to as "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "BWP" and the like.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, an access network device, a core network device, or the network device may be replaced by the terminal. For example, various embodiments of the present disclosure may also be applied to a structure in which communication between the access network device, the core network device, or the network device and the terminal is replaced by the communication between a plurality of terminals (for example, device-to-device (D2D), vehicle-to-everything (V2X), etc.). In this case, it may also be set as a structure in which the terminal has all or part of the functions of the access network device. In addition, terms such as "uplink" and "downlink" may also be replaced by terms corresponding to communication between terminals (for example, "side"). For example, "uplink channel", "downlink channel", etc. may be replaced by "side channel", and "uplink", "downlink", etc. may be replaced by "sidelink".

In some embodiments, the terminal may be replaced by the access network device, the core network device, or the network device. In this case, the access network device, the core network device, or the network device may also be configured to have a structure that has all or part of the functions of the terminal.

In some embodiments, the network device may also be referred to as a network function, a network function entity, or a network element.

In some embodiments, the access network device may also be referred to as an access network function, an access network element, etc.

In some embodiments, the core network device may also be referred to as a core network function, a core network, a core network element, etc. Further, in some embodiments, each network device in the core network may also be referred to as a network device, a network element, etc.

In some embodiments, acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

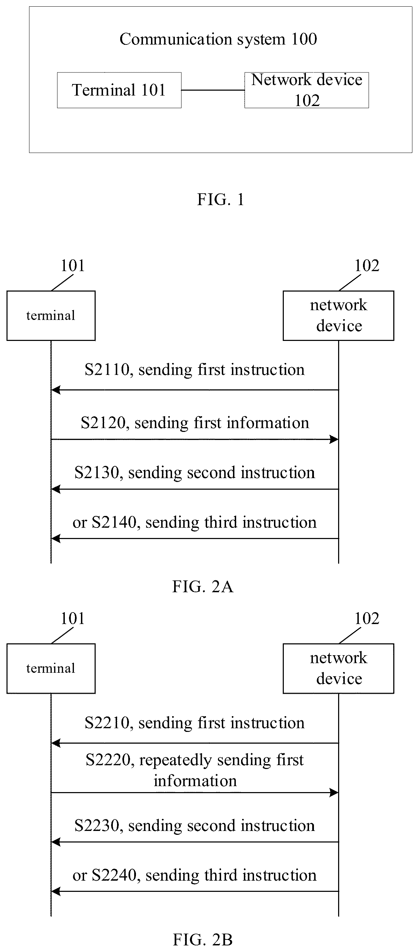

FIG. 1 is a schematic diagram illustrating an architecture of a communication system according to an embodiment of the disclosure. As shown in FIG. 1, the communication system 100 may include a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the terminal 101 may be implemented based on electronic circuits.

In some embodiments, the terminal 101 may be implemented based on electrical lines.

In some embodiments, the network device 102 may include at least one of an access network device and a core network device.

In some embodiments, the network device 102 in the communication system 100 may be replaced with another terminal.

In some embodiments, the communication system 100 may include at least two terminals, and these terminals may communicate using the communication method of embodiments of the present disclosure.

In some embodiments, the terminal 101 in the communication system 100 may be replaced by another network device.

In some embodiments, the communication system 100 may include at least two network devices, and these network devices may communicate using the communication method of embodiments of the present disclosure.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited herein.

In some embodiments, the core network device may be one device, or may be a plurality of devices or a group of devices. The network device may be virtual or physical. The core network may include, for example, at least one of an evolved packet core (EPC), a 5G core network (5GCN), and a next generation core (NGC).

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects other than those shown in FIG. 1. The number and form of the subjects are arbitrary. The subjects may be physical or virtual. The connection relationship between the subjects is an example. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-wideband (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In the field of communication technology, effective and reliable communication between a terminal and a network device is of utmost importance.

At present, technologies such as ambient IoT are very popular. Compared with narrowband IoT, in ambient IoT, an IoT terminals (also called as ambient IoT terminal) may obtain energy from outside and do not require power storage capacity or only require a small amount of power storage capacity. This allows the ambient IoT terminal to have lower complexity and cost. The ambient IoT technology may be applied in many scenarios.

In some embodiments, the ambient IoT technology may be applied to large-scale warehousing. In this case, the ambient IoT terminal may be attached to goods and used to identify the goods.

In some embodiments, the ambient IoT technology may be applied to ambient monitoring. In this case, the ambient IoT terminal may obtain and store service data and report the service data.

In some embodiments, the ambient IoT technology may also allow the ambient IoT terminal to perform operations. In this case, the network device may, for example, instruct the ambient IoT terminal to perform data operations.

In some embodiments, in a communication scenario (e.g., communication between the network device and the ambient IoT terminal), the communication procedure between the terminal and the network device needs to meet requirements of various application scenarios.

FIG. 2A is a schematic diagram illustrating an interaction example of a communication method according to an embodiment of the disclosure. Embodiments of the present disclosure relate to a communication method, which is applied to a communication system 100. As shown in FIG. 2A, the method includes steps S2110 to S2140.

In step S2110, a network device 102 sends a first instruction to a terminal 101.

In some embodiments, the terminal 101 may receive the first instruction from the network device 102.

In some embodiments, the first instruction may be used to instruct the terminal 101 to send information.

In some embodiments, the first instruction may be used to instruct the terminal 101 to report information.

In some embodiments, the first instruction may be used to instruct terminal 101 to send identification information of the terminal 101.

In some embodiments, the identification information may be used to identify the terminal 101. In an example, the identification information of the terminal 101 may be a serial number of the terminal 101. The terminal 101 may have a unique serial number. In an example, the identification information of the terminal 101 may be a name of the terminal 101. The terminal 101 may have a unique name.

In some embodiments, the first instruction may include fourth information. In an example, the fourth information may be used to identify the communication procedure between the terminal 101 and the network device 102. Specifically, the fourth information may be used to indicate that one or more sending and receiving operations between the terminal 101 and the network device 102 belong to the same communication procedure. It is understood that the communication procedure herein may also be understood as a session procedure, an interaction procedure, an interaction, etc.

In some embodiments, the fourth information may include an index for an interaction between the terminal 101 and the network device 102. The index may be used to implement indexing of the interaction between the terminal 101 and the network device 102.

In some embodiments, one interaction between the terminal 101 and the network device 102 may correspond to one index value.

In some embodiments, the index may also be referred to as a session number, and the index value may be a session number value.

In some embodiments, the network device 102 may send the first instruction in at least one of the following manners: broadcast, multicast, or unicast. In some embodiments, the network device 101 may communicate with a plurality of terminals 101. In this case, the network device 102 may send the first instruction in a broadcast or multicast manner. In some embodiments, the network device 101 may communicate with a single terminal 101. In this case, the network device 102 may send the first instruction in a unicast manner.

In some embodiments, the first instruction may include channel indication information.

In some embodiments, in the broadcast and/or multicast manner, the first instruction may include the channel indication information.

In some embodiments, the channel indication information may be used to indicate a channel used by the terminal 101 to report information. In an example, the channel may be a physical layer channel. For example, the physical layer channel may include at least one of: a time domain channel, a code domain channel, and a frequency domain channel.

In some embodiments, the channel indication information may be sent by the network device 102 to the terminal 101 via signaling other than the first instruction.

In some embodiments, the network device 102 may periodically send the first instruction.

In some embodiments, the network device 102 may send the first instruction non-periodically.

In some embodiments, the network device 102 may send the first instruction when a first condition is met. In an example, the first condition may be that a distance between the network device 102 and the terminal 101 is less than a threshold. In an example, the first condition may be manually triggered. In an example, the first condition may be automatically triggered.

In step S2120, the terminal 101 sends first information to the network device 102.

In some embodiments, in response to the first instruction, the terminal 101 may send the first information to the network device 102.

In some embodiments, after receiving the first instruction, the terminal 101 may work under stimulation of an electromagnetic wave carrying the first instruction, and send the first information stored locally to the network device 102.

In some embodiments, the network device 102 may receive the first information from the terminal 101.

In some embodiments, the terminal 101 may send the first information in a channel indicated by the first instruction.

In some embodiments, the terminal 101 may determine a channel by itself and send the first information in the determined channel. For example, the channel may be determined by the terminal 101 according to the fourth information.

In some embodiments, the first information may include the identification information of the terminal 101.

In some embodiments, the terminal 101 may be attached to an object and may be used by the network device 102 to identify the object.

In some embodiments, the terminal 101 may be a tag of goods in a process of transportation or storage, and the object to which the terminal 101 is attached may be the goods being transported or stored. For example, the tag may be a passive tag.

In some embodiments, the identification information of the terminal 101 may be the serial number of the terminal 101.

In some embodiments, the first information may include the fourth information.

In some embodiments, in a case where the first information includes the fourth information, the network device 102 may determine, based on the fourth information, that the received first information is reported by the terminal 101 in response to the first instruction. For example, in a case where the fourth information in the first instruction is the same as the fourth information in the first information, the network device 102 may determine, based on the fourth information, that the received first information is reported by the terminal 101 in response to the first instruction.

In some embodiments, after sending the first information, the terminal 101 may not respond to a first instruction including the fourth information having the same value within a period of time.

In step S2130, the network device 102 sends a second instruction to the terminal 101.

In some embodiments, after receiving the first information, the network device 102 may send the second instruction to the terminal 101.

In some embodiments, in a case of confirming in the previous step that the received first information is reported by the terminal 101 in response to the first instruction, the network device 102 may send the second instruction to the terminal 101.

In some embodiments, the terminal 101 may receive the second instruction from the network device 102.

In some embodiments, the second instruction may be used to indicate that the network device 102 successfully received the first information.

In some embodiments, in a case of receiving the second instruction, the terminal 101 may know that the network device 102 has successfully received the first information.

In some embodiments, the second instruction may be an ACK (acknowledgement) message.

In some embodiments, the second instruction may include fourth information. Thus, after receiving the second instruction, the terminal 101 may further confirm, based on the fourth information, that the network device 102 successfully receives the first information.

In some embodiments, after receiving the second instruction, the terminal 101 may not respond to the first instruction including the fourth information having the same value within a period of time.

In some embodiments, in a scenario where the network device 102 communicates with the plurality of terminals 101 by broadcasting or multicasting (multicast), the network device 102 may broadcast or multicast the same first instruction repeatedly to ensure that the plurality of terminals 101 may correctly receive the first instruction and then send the first information. In some embodiments, the first instructions sent repeatedly include the same fourth information. Due to factors such as a difference in positions of the plurality of terminals 101 relative to the device 102 and different surrounding environments of the terminals 101, a part of the plurality of terminals 101 may send the first information after receiving the first instruction for the first time, while the other part the plurality of terminals 101 may send the first information after receiving the first instruction a certain time later. For the former, the first instruction from the network device 102 may still be received after sending the first information. Then, the terminal 101 that has sent the first information may no longer respond to the first instruction including the same fourth information within a period of time (for example, 1 minute, 10 minutes, 30 minutes, 1 hour) after sending the first information, so as to avoid an increase in energy consumption and waste of communication resources caused by the terminal 101 repeatedly sending the first information for the same first instruction.

In step S2140, the network device 102 sends a third instruction to the terminal 101.

In some embodiments, in a case where the network device 102 fails to receive the first information, the network device 102 may send the third instruction to the terminal 101.

In some embodiments, in a case where the network device 102 does not receive the first information within a period of time after sending the first instruction, the network device 102 may determine that reception of the first information has failed.

In some embodiments, in a case where the network device 102 receives erroneous first information, the network device 102 may determine that the reception of the first information has failed.

In some embodiments, the terminal 101 may receive the third instruction from the network device 102.

In some embodiments, the third instruction may be used to indicate that the network device 102 fails to receive the first information.

In some embodiments, the third instruction may be a NACK (negative acknowledgement) message.

In some embodiments, the third instruction may include fourth information.

In some embodiments, after the network device 102 sends the third instruction to the terminal 101 in step S2140, the network device 102 may send the first instruction to the terminal 101 again. Correspondingly, the terminal 101 may receive the first instruction again. In this way, the process may jump to step S2110.

In some embodiments, after the network device 102 fails to receive the first information in step S2120, the network device 102 may send the first instruction to the terminal 101 again. Correspondingly, the terminal 101 may receive the first instruction again. In this way, the process may jump to step S2110.

In some embodiments, the first instruction sent again by the network device 102 may include the fourth information.

In some embodiments, the first instruction sent again by the network device 102 may include the fourth information that may be the same as the fourth information in the first instruction in step S2110.

In some embodiments, the terminal 101 may send the first information in a channel different from a channel previously used.

In some embodiments, the terminal 101 may send the first information in a channel same as a channel previously used.

In some embodiments, step S2130 and step S2140 may be performed alternatively.

The communication method involved in this embodiment of the present disclosure may include at least one of steps S2110 to S2140. For example, step S2110 may be implemented as an independent embodiment. For example, a combination of steps S2110 and S2120 may be implemented as an independent embodiment. For example, a combination of steps S2110, S2120, and S2130 may be implemented as an independent embodiment. For example, a combination of steps S2110, S2120, and S2140 may be implemented as an independent embodiment. It should be noted that possible independent embodiments formed by one or more steps in steps S2110 to S2140 are not limited thereto.

In some embodiments, steps S2120, S2130, and S2140 are optional, and one or more of these steps may be omitted or replaced in different embodiments.

FIG. 2B is a schematic diagram illustrating an interaction example of a communication method according to an embodiment of the disclosure. Embodiments of the present disclosure relate to a communication method, which is applied to a communication system 100. As shown in FIG. 2B, the method includes steps S2210 to S2240.

In step S2210, a network device 102 sends a first instruction to a terminal 101.

For optional implementations of step S2210, reference may be made to the optional implementations of step S2110 in FIG. 2A and other related parts in the embodiments related to FIG. 2A, which are not repeated herein.

In some embodiments, the first instruction may include repetition enabling information. The repetition enabling information may be used to instruct the terminal 101 to repeatedly send first information.

In some embodiments, the first instruction may include repetition quantity information. The repetition quantity information may be used to indicate the number of times the terminal 101 repeatedly sends the first information.

In step S2220, the terminal 101 repeatedly sends the first information to the network device 102.

For optional implementations of step S2220, reference may be made to the optional implementations of step S2120 in FIG. 2A and other related parts in the embodiments related to FIG. 2A, which are not repeated herein.

In some embodiments, in response to the first instruction, the terminal 101 may repeatedly send the first information to the network device 102.

In some embodiments, the network device 102 may receive the first information from the terminal 101.

In some embodiments, in a case where the first instruction includes the repetition enabling information, the terminal 101 may repeatedly send the first information to the network device 102 according to the repetition enabling information.

In some embodiments, in a case where the first instruction includes the repetition quantity information, the terminal 101 may repeatedly send the first information according to the repetition quantity information and the number of times indicated by the repetition quantity information.

In some embodiments, in a case where the first instruction does not include the repetition quantity information, the terminal 101 may repeatedly send the first information according to a preset number of times.

In some embodiments, the terminal 101 may repeatedly send the first information according to the preset number of times by default.

In some embodiments, the terminal 101 may send the first information in a channel indicated by the first instruction.

In some embodiments, the terminal 101 may determine a channel by itself, and send the first information in the determined channel. In an example, the channel may be determined by the terminal 101 according to the fourth information.

In some embodiments, the number of channels used to repeatedly send the first information may be more than one.

In some embodiments, the number of channels may be equal to the number of times the first information is repeatedly sent.

In some embodiments, the terminal 101 may repeatedly send the first information in a plurality of time domain channels. In an example, the terminal 101 may repeatedly send the first information at a plurality of time points that are equally spaced in the time domain.

In some embodiments, the terminal 101 may repeatedly send the first information in a plurality of frequency domain channels.

In some embodiments, terminal 101 may repeatedly send the first information in a plurality of code domain channels.

In some embodiments, the terminal 101 may repeatedly send the first information in any combination of the plurality of time domain channels, and/or the plurality of frequency domain channels, and/or the plurality of code domain channels.

In step S2230, the network device 102 sends a second instruction to the terminal 101.

For optional implementations of step S2230, reference may be made to the optional implementations of step S2130 in FIG. 2A and other related parts in the embodiments related to FIG. 2A, which are not repeated herein.

In some embodiments, after receiving the first information, the network device 102 may send the second instruction to the terminal 101.

In some embodiments, the network device 102 may send the second instruction to the terminal 101 in a case of receiving at least one of the first information repeatedly sent by the terminal 101.

In some embodiments, the terminal 101 may receive the second instruction from the network device 102.

In step S2240, the network device 102 sends a third instruction to the terminal 101.

For optional implementations of step S2240, reference may be made to the optional implementations of step S2140 in FIG. 2A and other related parts in the embodiments related to FIG. 2A, which are not repeated herein.

The communication method involved in the embodiments of the present disclosure may include at least one of steps S2210 to S2240. For example, step S2210 may be implemented as an independent embodiment. For example, a combination of steps S2210 and S2220 may be implemented as an independent embodiment. For example, a combination of steps S2210, S2220, and S2230 may be implemented as an independent embodiment. For example, a combination of steps S2210, S2220, and S2240 may be implemented as an independent embodiment. It should be noted that possible independent embodiments formed by one or more steps in steps S2210 to S2240 are not limited thereto.

In some embodiments, steps S2220, S2230, and S2240 are optional, and one or more of these steps may be omitted or replaced in different embodiments.

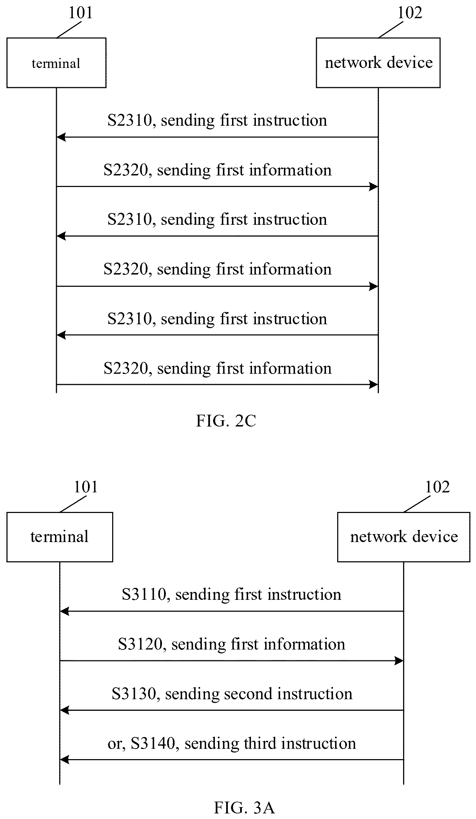

FIG. 2C is a schematic diagram illustrating an interaction example of a communication method according to an embodiment of the disclosure. Embodiments of the present disclosure relate to a communication method, which is applied to a communication system 100. As shown in FIG. 2C, the method includes steps S2310 to S2320.

In step S2310, a network device 102 sends a first instruction to a terminal 101.

For optional implementations of step S2310, reference may be made to the optional implementations of step S2110 in FIG. 2A and step S2210 in FIG. 2B, and other related parts in the embodiments related to FIG. 2A, which are not repeated herein.

In step S2320, the terminal 101 sends first information to the network device 102.

For optional implementations of step S2320, reference may be made to the optional implementations of step S2120 in FIG. 2A and step S2220 in FIG. 2B, and other related parts in the embodiments related to FIG. 2A, which are not repeated herein.

In some embodiments, the above procedure formed by step S2310 and step S2320 may be repeatedly executed. For example, it may be executed in the following order: step S2310, step S2320, step S2310, step S2320, step S2310, step S2320, and so on.

In some embodiments, the above procedure co formed by steps S2310 and S2320 may be repeatedly executed for any number of times. For example, the above procedure may be repeatedly executed three times. At this time, the network device 102 may send the first instruction three times to the terminal 101. Then, the number of first instructions may be three. Correspondingly, the terminal 101 may send the first information three times to the network device 102. In this case, for each first instruction, the terminal 101 may send the first information to the network device 102 once. The number of times the terminal 101 sends the first information may be equal to the number of times the first instruction is received.

In some embodiments, it is noted that the number of executions of step S2310 may be different from the number of executions of step S2320. For example, after step S2310 is executed a plurality of times, step S2320 is executed once. It should be noted that the number of executions and the execution order of step S2310 and step S2320 are not specifically limited in the embodiments of the present disclosure.

FIG. 3A is a schematic diagram illustrating an interaction example of a communication method according to an embodiment of the disclosure. Embodiments of the present disclosure relate to a communication method, which is applied to a communication system 100. As shown in FIG. 3A, the method includes steps S3110 to S3140.

In step S3110, a network device 102 sends a first instruction to a terminal 101.

For optional implementations of step S3110, reference may be made to the optional implementations of step S2110 in FIG. 2A, and other related parts in the embodiments related to FIG. 2A, which are not repeated herein.

In some embodiments, the terminal 101 may receive the first instruction from the network device 102.

In some embodiments, the first instruction may be used to instruct the terminal 101 to send information.

In some embodiments, the first instruction may be used to instruct the terminal 101 to report information.

In some embodiments, the first instruction may be used to instruct the terminal 101 to send identification information and service data of the terminal 101.

In some embodiments, the first instruction may be used to instruct the terminal 101 to send service data of the terminal 101.

In some embodiments, the service data may be data acquired by the terminal 101. For example, the service data may be data having been stored on the terminal 101.

In step S3120, the terminal 101 sends first information to the network device 102.

For optional implementations of step S3120, reference may be made to the optional implementations of step S2120 in FIG. 2A, and other related parts in the embodiments related to FIG. 2A, which are not repeated herein.

In some embodiments, the first information may include the identification information and the service data of the terminal 101.

In some embodiments, the terminal 101 may be a sensor. In some examples, the terminal 101 may be a temperature sensor, a humidity sensor, a barometer, an accelerometer, or other sensors. For example, the service data may be sensed data of the terminal 101. For example, the service data may include at least one of a temperature value, a humidity value, a pressure value, or an acceleration value. Of course, the service data may also include other data.

In some embodiments, the service data may also be referred to as service information, service content, a service signal, etc.

In some embodiments, the terminal 101 may utilize energy in the surrounding environment to perform sensing operations and obtain the service data. In some examples, the terminal 101 may perform energy harvest by utilizing light energy, thermal energy, electromagnetic energy, and the like.

In some embodiments, after receiving the first instruction, the terminal 101 may use energy of an electromagnetic wave carrying the first instruction to sense and obtain the service data.

In step S3130, the network device 102 sends a second instruction to the terminal 101.

For optional implementations of step S3130, reference may be made to the optional implementations of step S2130 in FIG. 2A, and other related parts in the embodiments related to FIG. 2A, which are not repeated herein.

In step S3140, the network device 102 sends a third instruction to the terminal 101.

For optional implementations of step S3140, reference may be made to the optional implementations of step S3140 in FIG. 2A, and other related parts in the embodiments related to FIG. 2A, which are not repeated herein.

In some embodiments, step S2130 and step S2140 may be performed alternatively.

The communication method involved in the embodiments of the present disclosure may include at least one of step S3110 to step S3140. For example, step S3110 may be implemented as an independent embodiment. For example, a combination of step S3110 and step S3120 may be implemented as an independent embodiment. For example, a combination of step S3110, step S3120, and step S3130 may be implemented as an independent embodiment. For example, a combination of step S3110, step S3120, and step S3140 may be implemented as an independent embodiment. It should be noted that possible independent embodiments formed by one or more steps in step S3110 to step S3140 are not limited thereto.

In some embodiments, step S3120, step S3130, and step S3140 are optional, and one or more of these steps may be omitted or replaced in different embodiments.

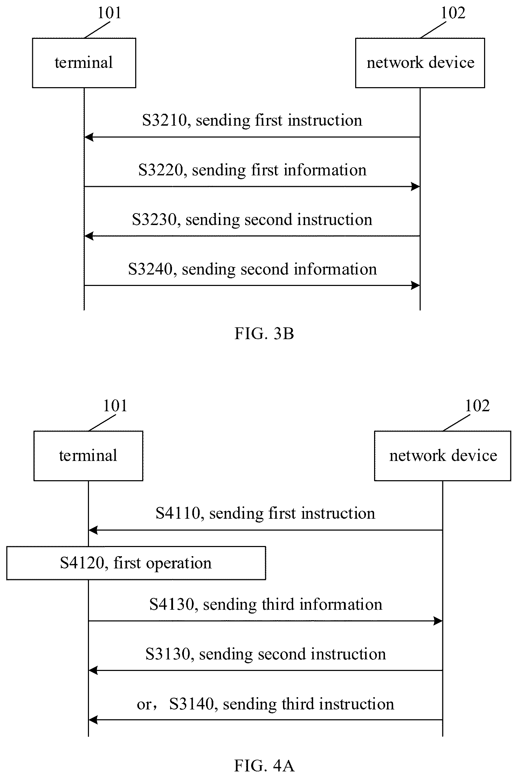

FIG. 3B is a schematic diagram illustrating an interaction example of a communication method according to an embodiment of the disclosure. Embodiments of the present disclosure relate to a communication method, which is applied to a communication system 100. As shown in FIG. 3B, the method includes step S3210 to step S3240.

In step S3210, a network device 102 sends a first instruction to a terminal 101.

For optional implementations of step S3210, reference may be made to the optional implementations of step S3110 in FIG. 2A, and other related parts in the embodiments related to FIG. 2A, which are not repeated herein.

In step S3220, the terminal 101 sends first information to the network device 102.

For optional implementations of step S3220, reference may be made to the optional implementations of step S3120 in FIG. 2A, and other related parts in the embodiments related to FIG. 2A, which are not repeated herein.

In some embodiments, the first information may include identification information of the terminal 101.

In step S3230, the network device 102 sends a second instruction to the terminal 101.

For optional implementations of step S3230, reference may be made to the optional implementations of step S3130 in FIG. 2A, and other related parts in the embodiments related to FIG. 2A, which are not repeated herein.

In step S3240, the terminal 101 sends second information to the network device 102.

In some embodiments, the network device 102 may receive the second information from the terminal 101.

In some embodiments, after receiving the second instruction, the terminal 101 may send the second information to the network device 102.

In some embodiments, in a case where the first information does not include service data, the terminal 101 may send the second information to the network device 102.

In some embodiments, the second information may include the service data of the terminal 101.

In some embodiments, the terminal 101 may be a sensor. In some examples, the terminal 101 may be a temperature sensor, a humidity sensor, a barometer, an accelerometer, or other sensors. For example, the service data may be sensed data of the terminal 101. For example, the service data may include at least one of a temperature value, a humidity value, a pressure value, or an acceleration value. Of course, the service data may also include other data.

In some embodiments, the terminal 101 may utilize energy in the surrounding environment to perform sensing operations and obtain the service data. In some examples, the terminal 101 may perform energy harvest by utilizing light energy, thermal energy, electromagnetic energy, and the like.

In some embodiments, the service data may have been stored in the terminal 101 before the first instruction is received.

In some embodiments, after receiving the first instruction, the terminal 101 may use energy of an electromagnetic wave carrying the first instruction to sense and obtain the service data.

In some embodiments, the second information may include fourth information.

In some embodiments, a channel through which the terminal 101 sends the second information may be the same as a channel through which the terminal 101 sends the first information. It is noted that, since the network device 102 sends the second instruction to the terminal 101, the terminal 101 may learn that a channel used to send the first information is available (for example, not occupied by communication of other terminals). Then, the terminal 101 may continue to send the second information in the channel. In this way, in a case where the first information is successfully sent, a probability that the channel used to send the first information is still available is relatively high, which may ensure that transmission of the second information has a high success rate.

In some embodiments, after sending the second information, the terminal 101 may not respond to the first instruction including the fourth information having the same value within a period of time.

The communication method involved in this embodiment of the present disclosure may include at least one of step S3210 to step S3240. For example, step S3210 may be implemented as an independent embodiment. For example, a combination of step S3210, step S3220, step S3230, and step S3240 may be implemented as an independent embodiment. It should be noted that possible independent embodiments formed by one or more steps in step S3210 to step S3240 are not limited thereto.

In some embodiments, step S3220, step S3230, and step S3240 are optional, and one or more of these steps may be omitted or replaced in different embodiments.

FIG. 4A is a schematic diagram illustrating an interaction example of a communication method according to an embodiment of the disclosure. Embodiments of the present disclosure relate to a communication method, which is applied to a communication system 100. As shown in FIG. 4A, the method includes step S4110 to step S4140.

In step S4110, a network device 102 sends a first instruction to a terminal 101.

For optional implementations of step S4110, reference may be made to the optional implementations of step S2110 in FIG. 2A, and other related parts in the embodiments related to FIG. 2A, which are not repeated herein.

In some embodiments, the first instruction may be used to instruct the terminal 101 to perform a first operation.

In some embodiments, the first operation may include at least one of: data writing, data deleting, and data modifying. Of course, the first operation may also include other operations, which are not specifically limited in embodiments of the present disclosure.

In some embodiments, the first instruction may include operation time information. The operation time information may be used to indicate a time when the terminal 101 performs the first operation.

In some embodiments, the operation time information may include a delay duration. The delay duration is a length of a time from when the terminal 101 receives the first instruction to when the terminal 101 performs the first operation.

In step S4120, the terminal 101 performs a first operation.

In some embodiments, the terminal 101 may perform the first operation in response to the first instruction.

In some embodiments, the terminal 101 may perform the first operation using energy of an electromagnetic wave carrying the first instruction.

In some embodiments, terminal 101 may perform the first operation using energy (e.g., light energy, thermal energy, electromagnetic energy) in the surrounding environment.

In some embodiments, the terminal 101 may perform the first operation immediately after receiving the first instruction.

In some embodiments, the terminal 101 may perform the first operation according to the operation time information.

In some embodiments, after receiving the first instruction, the terminal 101 may wait for the delay duration and perform the first operation when the delay duration ends.

In step S4130, the terminal 101 sends third information to the network device 102.

In some embodiments, in response to the first instruction, the terminal 101 may send the third information to the network device 102.

In some embodiments, after receiving the first instruction, the terminal 101 may send the third information to the network device 102 under excitation of the electromagnetic wave carrying the first instruction.

In some embodiments, the network device 102 may receive the third information from the terminal 101.

In some embodiments, the terminal 101 may send the third information via a channel indicated by the first instruction.

In some embodiments, the terminal 101 may determine a channel by itself, and send the third information via the determined channel. In an example, the channel may be determined by the terminal 101 according to fourth information.

In some embodiments, the third information may be used to indicate a result of the terminal performing the first operation.

In some embodiments, the third information may include identification information of the terminal 101.

In some embodiments, the third information may include control information for the terminal 101 to perform the first operation. In an example, the control information may be used to indicate that the terminal 101 successfully performs the first operation or fails to perform the first operation. For example, the control information may include a success indication or a failure indication.

In some embodiments, in a case where the terminal 101 fails to perform the first operation, the control information may indicate a cause for the failure.

In some embodiments, the third information may include the fourth information.

In some embodiments, after sending the third information, the terminal 101 may not respond to the first instruction including the fourth information having the same value within a period of time.

In some embodiments, in a scenario where the network device 102 communicates with the plurality of terminals 101 by broadcasting or multicasting (multicast), the network device 102 may broadcast or multicast the same first instruction repeatedly to ensure that the plurality of terminals 101 may correctly receive the first instruction and then send the first information. In some embodiments, the first instructions sent repeatedly include the same fourth information. Due to factors such as a difference in positions of the plurality of terminals 101 relative to the device 102 and different surrounding environments of the terminals 101, a part of the plurality of terminals 101 may perform the first operation after receiving the first instruction for the first time, while the other part of the plurality of terminals 101 may perform the first operation after receiving the first instruction at a certain later time. For the former, the first instruction from the network device 102 may still be received after performing the first operation in step S4120 or sending the third information in step S4130. Then, the terminal 101 that has executed the first operation and even sent the third information may no longer respond to the first instruction including the same fourth information within a period of time (for example, 1 minute, 10 minutes, 30 minutes, 1 hour) after the execution, so as to avoid an increase in energy consumption and waste of resources caused by the terminal 101 repeatedly executing the first operation for the same first instruction.

In step S4140, the network device 102 sends a second instruction to the terminal 101.

For optional implementations of step S4140, reference may be made to the optional implementations of step S2130 in FIG. 2A, and other related parts in the embodiments related to FIG. 2A, which are not repeated herein.

In some embodiments, after receiving the third information, the network device 102 may send the second instruction to the terminal 101 when the third information indicates that the first operation is successful.

In some embodiments, the second instruction may include fourth information. Thus, after receiving the second instruction, the terminal 101 may further confirm, based on the fourth information, that the network device 102 successfully receives the third information.

In step S4150, the network device 102 sends a third instruction to the terminal 101.

For optional implementations of step S4140, reference may be made to the optional implementations of step S2130 in FIG. 2A, and other related parts in the embodiments related to FIG. 2A, which are not repeated herein.

In some embodiments, in a case where the network device 102 fails to receive the third information, the network device 102 may send the third instruction to the terminal 101.

In some embodiments, the above step S4140 and step S4150 may be performed alternatively.

The communication method involved in this embodiment of the present disclosure may include at least one of step S4110 to step S4150. For example, step S4110 may be implemented as an independent embodiment. For example, a combination of step S4110 and step S4120 may be implemented as an independent embodiment. For example, a combination of step S4110, step S4120, and step S4130 may be implemented as an independent embodiment. It should be noted that possible independent embodiments formed by one or more steps in step S4110 to step S4150 are not limited thereto.

In some embodiments, step S4120, step S4130, step S4140, and step S4150 are optional, and one or more of these steps may be omitted or replaced in different embodiments.

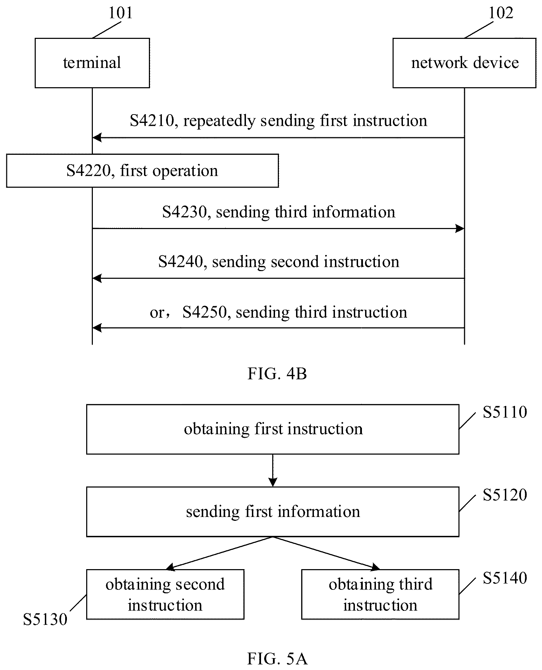

FIG. 4B is a schematic diagram illustrating an interaction example of a communication method according to an embodiment of the disclosure. Embodiments of the present disclosure relate to a communication method, which is applied to a communication system 100. As shown in FIG. 4B, the method includes steps S4210 to S4240.

In step S4210, a network device 102 repeatedly sends a first instruction to a terminal 101.

For optional implementations of step S4210, reference may be made to the optional implementations of step S4110 in FIG. 4A, and other related parts in the embodiments related to FIG. 4A, which are not repeated herein.

In some embodiments, the terminal 101 may receive a first instruction repeatedly sent from the network device 102.

In some embodiments, the network device 102 may send the first instruction to the terminal 101 for three times.

In some embodiments, the first instructions repeatedly sent by the network device 102 may be the same.

In step S4220, the terminal 101 performs a first operation.

For optional implementations of step S4220, reference may be made to the optional implementations of step S4120 in FIG. 4A, and other related parts in the embodiments related to FIG. 4A, which are not repeated herein.

In some embodiments, the terminal 101 may perform the first operation in a case of receiving any one of a plurality of first instructions from the network device 102.

In some embodiments, the terminal 101 may perform the first operation in a case of receiving a first instruction located first from the network device 102.

In step S4230, the terminal 101 sends third information to the network device 102.

For optional implementations of step S4230, reference may be made to the optional implementations of step S4130 in FIG. 4A, and other related parts in the embodiments related to FIG. 4A, which are not repeated herein.

In step S4240, the network device 102 sends a second instruction to the terminal 101.

For optional implementations of step S4230, reference may be made to the optional implementations of step S4130 in FIG. 4A, and other related parts in the embodiments related to FIG. 4A, which are not repeated herein.

In step S4250, the network device 102 sends a third instruction to the terminal 101.

For optional implementations of step S4250, reference may be made to the optional implementations of step S4140 in FIG. 4A, and other related parts in the embodiments related to FIG. 4A, which are not repeated herein.

The communication method involved in this embodiment of the present disclosure may include at least one of step S4210 to step S4250. For example, step S4210 may be implemented as an independent embodiment. For example, a combination of step S4210 and step S4220 may be implemented as an independent embodiment. For example, a combination of step S4210, step S4220, and step S4230 may be implemented as an independent embodiment. It should be noted that possible independent embodiments formed by one or more steps in step S4210 to step S4250 are not limited thereto.

In some embodiments, step S4220, step S4230, step S4240, and step S4250 are optional, and one or more of these steps may be omitted or replaced in different embodiments.

In some embodiments, the terminal 101 in embodiments of the present disclosure may be an IoT device. In an example, the terminal 101 may be an ambient IoT device. For example, the terminal 101 may be a passive ambient IoT terminal or an ambient IoT device with a relatively low power storage capacity. In an example, the terminal 101 may be other types of devices (also referred to as low-end devices) that also have relatively low power consumption, and relatively low data processing and communication capabilities.

In some embodiments, the terminal 101 in embodiments of the present disclosure may be a device using technologies such as NB-IoT, MTC, or 5G Redcap.

In some embodiments, names of information and the like are not limited to the names recorded in embodiments. The terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" may be used interchangeably.

In some embodiments, the terms such as "moment", "time point", "time", "time position" and the like may be interchangeable, and the terms such as "duration", "period", "time window", "window", "time" and the like may be interchangeable.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bidirectionally transmit", "send and/or receive" and the like may be used interchangeably.

In some embodiments, the terms such as "certain", "preset", "predetermined", "set", "indicated", "a", "any", "first", and the like may be used interchangeable. "certain A", "preset A", "predetermined A", "set A", "indicated A", "a A", "any A", "first A" may be interpreted as A predefined in a protocol, or as A obtained via setting, configuration, or indication, or as certain A, a A, any A, or first A, etc., but is not limited herein.

In some embodiments, the determination or judgment may be performed by a value represented by 1 bit (0 or 1), or by a true/false value (Boolean value) represented by true or false, or by comparison of numerical values (for example, comparison with a predetermined value), but is not limited herein.

FIG. 5A is a flowchart illustrating an example of a communication method according to an embodiment of the disclosure. Embodiments of the present disclosure relate to a communication method, which is applied to a terminal 101. As shown in FIG. 5A, the method includes step S5110 to step S5140.

In step S5110, a first instruction is obtained.

For optional implementations of step S5110, reference may be made to optional implementations of step S2110 in FIG. 2A, step S2210 in FIG. 2B, step S2310, step S2330, step S2350 in FIG. 2C, step S3110 in FIG. 3A, and other related parts in the embodiments involved in FIG. 2A, FIG. 2B, FIG. 2C, and FIG. 3A, which may not be repeated here.

In some embodiments, the terminal 101 may receive the first instruction from the network device 102, but is not limited thereto, or may also receive the first instruction from other entities.

In some embodiments, the first instruction may be sent by the network device 102.

In some embodiments, the terminal 101 may obtain the first instruction specified by a protocol.

In some embodiments, the terminal 101 may obtain the first instruction from an upper layer.

In some embodiments, the terminal 101 performs processing to obtain the first instruction.

In some embodiments, step S5110 may be omitted, and the terminal 101 may autonomously implement the function indicated by the first instruction, or the above function may be default.

In step S5120, first information is sent.

For optional implementations of step S5120, reference may be made to optional implementations of step S2120 in FIG. 2A, step S2220 in FIG. 2B, step S2320, step S2340, step S2360 in FIG. 2C, step S3120 in FIG. 3A, and other related parts in the embodiments involved in FIG. 2A, FIG. 2B, FIG. 2C, and FIG. 3A, which will not be repeated here.

In some embodiments, the terminal 101 may send the first information to the network device 102, but is not limited thereto, or may also send the first information to other entities.

In some embodiments, the first information may be received by the network device 102.

In step S5130, a second instruction is obtained.

For optional implementations of step S5130, reference may be made to optional implementations of step S2130 in FIG. 2A, step S2230 in FIG. 2B, step S3130 in FIG. 3A, and other related parts in the embodiments involved in FIG. 2A, FIG. 2B, and FIG. 3A, which may not be repeated here.

In some embodiments, the terminal 101 may receive the second instruction from the network device 102, but is not limited thereto, or may also receive the second instruction from other entities.

In some embodiments, the second instruction may be sent by the network device 102.

In some embodiments, the terminal 101 may obtain the second instruction specified by a protocol.

In some embodiments, the terminal 101 may obtain the second instruction from an upper layer.

In some embodiments, the terminal 101 performs processing to obtain the second instruction.

In some embodiments, step S5130 may be omitted, and the terminal 101 may autonomously implement the function indicated by the second instruction, or the above function may be default.

In step S5140, a third instruction is obtained.

For optional implementations of step S5140, reference may be made to optional implementations of step S2140 in FIG. 2A, step S2240 in FIG. 2B, step S3140 in FIG. 3A, and other related parts in the embodiments involved in FIG. 2A, FIG. 2B, and FIG. 3A, which will not be repeated here.

In some embodiments, the terminal 101 may receive the third instruction from the network device 102, but is not limited thereto, or may also receive the third instruction from other entities.

In some embodiments, the third instruction may be sent by the network device 102.

In some embodiments, the terminal 101 may obtain the third instruction specified by a protocol.

In some embodiments, the terminal 101 may obtain the third instruction from an upper layer.

In some embodiments, the terminal 101 performs processing to obtain the third instruction.

In some embodiments, step S5140 may be omitted, and the terminal 101 may autonomously implement the function indicated by the third instruction, or the above function may be default.

In some embodiments, step S5130 and step S5140 may be performed alternatively.

The communication method involved in this embodiment of the present disclosure may include at least one of step S5110 to step S5140. For example, step S5110 may be implemented as an independent embodiment. For example, a combination of step S5110 and step S5120 may be implemented as an independent embodiment. For example, a combination of step S5110, step S5120, and step S5130 may be implemented as an independent embodiment. For example, a combination of step S5110, step S5120, and step S5140 may be implemented as an independent embodiment. It should be noted that possible independent embodiments formed by one or more steps in step S5110 to step S5140 are not limited to this.

In some embodiments, step S5120, step S5130, and step S5140 are optional, and one or more of these steps may be omitted or replaced in different embodiments.

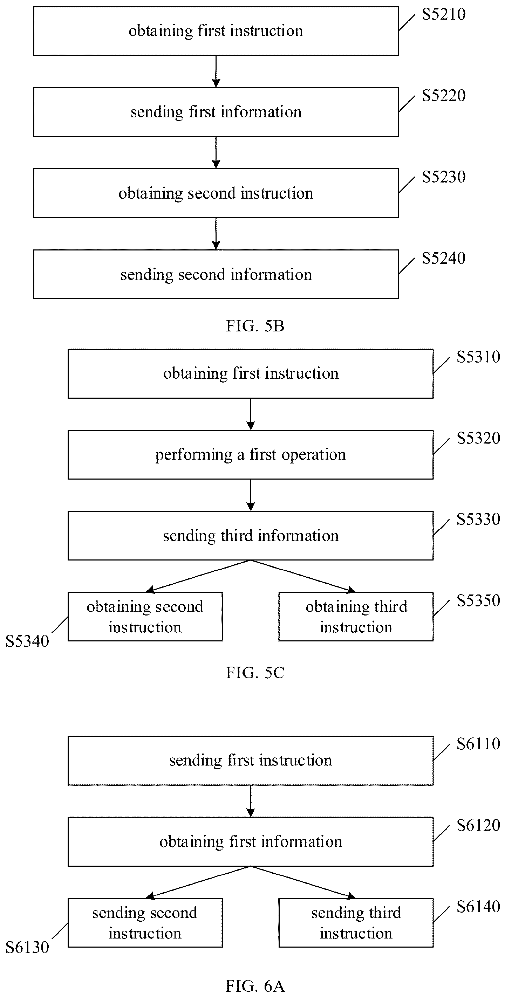

FIG. 5B is a flowchart illustrating an example of a communication method according to an embodiment of the disclosure. Embodiments of the present disclosure relate to a communication method, which is applied to a terminal 101. As shown in FIG. 5B, the method includes step S5210 to step S5240.

In step S5210, a first instruction is obtained.

For optional implementations of step S5210, reference may be made to optional implementations of step S3210 in FIG. 3B, step S5110 in FIG. 5A, and other related parts in the embodiments involved in FIG. 3B, and FIG. 5A, which may not be repeated here.

In some embodiments, the terminal 101 may receive the first instruction from a network device 102, but is not limited thereto, or may also receive the first instruction from other entities.

In some embodiments, the first instruction may be sent by the network device 102.

In step S5220, first information is sent.

For optional implementations of step S5220, reference may be made to optional implementations of step S3220 in FIG. 3B, step S5120 in FIG. 5A, and other related parts in the embodiments involved in FIG. 3B, and FIG. 5A, which will not be repeated here.

In some embodiments, the terminal 101 may send the first information to the network device 102, but is not limited thereto, or may also send the first information to other entities.

In some embodiments, the first information may be received by the network device 102.

In step S5230, a second instruction is obtained.

For optional implementations of step S5230, reference may be made to optional implementations of step S3230 in FIG. 3B, step S5130 in FIG. 5A, and other related parts in the embodiments involved in FIG. 3B, and FIG. 5A, which will not be repeated here.

In some embodiments, the terminal 101 may receive the second instruction from the network device 102, but is not limited thereto, or may also receive the second instruction from other entities.

In some embodiments, the second instruction may be sent by the network device 102.

In step S5240, second information is sent.

For optional implementations of step S5240, reference may be made to optional implementations in FIG. 3B, and other related parts in the embodiments involved in FIG. 3B, which will not be repeated here.

In some embodiments, the terminal 101 sends the second information to the network device 102, but is not limited thereto, or the terminal 101 may also send the second information to other entities.

In some embodiments, the second information may be received by the network device 102.

In some embodiments, step S5230 and step S5240 may be performed alternatively.

The communication method involved in this embodiment of the present disclosure may include at least one of step S5210 to step S5240. For example, step S5210 may be implemented as an independent embodiment. For example, a combination of step S5210, step S5220, step S5230, and step S5240 may be implemented as an independent embodiment. It should be noted that possible independent embodiments formed by one or more steps in step S5210 to step S5240 are not limited thereto.

In some embodiments, step S5220, step S5230, and step S5240 are optional, and one or more of these steps may be omitted or replaced in different embodiments.

FIG. 5C is a flowchart illustrating an example of a communication method according to an embodiment of the disclosure. Embodiments of the present disclosure relate to a communication method, which is applied to a terminal 101. As shown in FIG. 5C, the method includes step S5310 to step S5350.

In step S5310, a first instruction is obtained.

For optional implementations of step S5310, reference may be made to optional implementations of step S4110 in FIG. 4A, step S4210 in FIG. 4B, step S5110 in FIG. 5A, and step S5210 in FIG. 5B, and other related parts in the embodiments involved in FIG. 4A, FIG. 4B, FIG. 5A, and FIG. 5B, which may not be repeated here.

In some embodiments, the terminal 101 may receive the first instruction from the network device 102, but is not limited thereto, or may also receive the first instruction from other entities.

In some embodiments, the first instruction may be sent by the network device 102.

In step S5320, a first operation is performed.

For optional implementations of step S5320, reference may be made to optional implementations of step S4120 in FIG. 4A, step S4220 in FIG. 4B, and other related parts in the embodiments involved in FIG. 4A, and FIG. 4B, which may not be repeated here.

In step S5330, third information is sent.

For optional implementations of step S5330, reference may be made to optional implementations of step S4130 in FIG. 4A, step S4230 in FIG. 4B, and other related parts in the embodiments involved in FIG. 4A, and FIG. 4B, which may not be repeated here.

In some embodiments, the terminal 101 may send the third information to the network device 102, but is not limited thereto, or may also send the third information to other entities.

In some embodiments, the third information may be received by the network device 102.

In step S5340, a second instruction is obtained.

For optional implementations of step S5340, reference may be made to optional implementations of step S4140 in FIG. 4A, step S4240 in FIG. 4B, step S5130 in FIG. 5A, step S5230 in FIG. 5B, and other related parts in the embodiments involved in FIG. 4A, FIG. 4B, FIG. 5A, and FIG. 5B, which may not be repeated here.

In some embodiments, the terminal 101 may receive the second instruction from the network device 102, but is not limited thereto, or may also receive the second instruction from other entities.

In some embodiments, the second instruction may be sent by the network device 102.

In step S5350, a third instruction is obtained.

For optional implementations of step S5350, reference may be made to optional implementations of step S4150 in FIG. 4A, step S4250 in FIG. 4B, step S5140 in FIG. 5A, step S5240 in FIG. 5B, and other related parts in the embodiments involved in FIG. 4A, FIG. 4B, FIG. 5A, and FIG. 5B, which will not be repeated here.

In some embodiments, the terminal 101 may receive the third instruction from the network device 102, but is not limited thereto, or may also receive the third instruction from other entities.

In some embodiments, the third instruction may be sent by the network device 102.

In some embodiments, step S5340 and step S5350 may be performed alternatively.

The communication method involved in this embodiment of the present disclosure may include at least one of step S5310 to step S5350. For example, step S5310 may be implemented as an independent embodiment. For example, a combination of steps S5310 and step S5320 may be implemented as an independent embodiment. For example, a combination of step S5310, step S5320, and step S5330 may be implemented as an independent embodiment. It should be noted that possible independent embodiments formed by one or more steps in step S5310 to step S5350 are not limited to this.

In some embodiments, step S5320, step S5330, step S5340, and step S5350 are optional, and one or more of these steps may be omitted or replaced in different embodiments.

FIG. 6A is a flowchart illustrating an example of a communication method according to an embodiment of the disclosure. Embodiments of the present disclosure relate to a communication method, which is applied to a network device 102. As shown in FIG. 6A, the method includes step S6110 to step S6140.

In step S6110, a first instruction is sent.

For optional implementations of step S6110, reference may be made to optional implementations of step S2110 in FIG. 2A, step S2210 in FIG. 2B, step S2310, step S2330, step S2350 in FIG. 2C, step S3110 in FIG. 3A, and other related parts in the embodiments involved in FIG. 2A, FIG. 2B, FIG. 2C, and FIG. 3A, which may not be repeated here.

In some embodiments, the network device 102 may send the first instruction to the terminal 101, but is not limited thereto, or may also send the first instruction to other entities.

In some embodiments, the first instruction may be received by the terminal 101.

In step S6120, first information is obtained.

For optional implementations of step S6120, reference may be made to optional implementations of step S2120 in FIG. 2A, step S2220 in FIG. 2B, step S2320, step S2340, step S2360 in FIG. 2C, step S3120 in FIG. 3A, and other related parts in the embodiments involved in FIG. 2A, FIG. 2B, FIG. 2C, and FIG. 3A, which may not be repeated here.

In some embodiments, the network device 102 may receive the first information from the terminal 101, but is not limited thereto, or may also receive the first information from other entities.

In some embodiments, the first information may be sent by the terminal 101.

In step S6130, a second instruction is sent.

For optional implementations of step S6130, reference may be made to optional implementations of step S2130 in FIG. 2A, step S2230 in FIG. 2B, step S3130 in FIG. 3A, and other related parts in the embodiments involved in FIG. 2A, FIG. 2B, and FIG. 3A, which will not be repeated here.

In some embodiments, the network device 102 may send the second instruction to the terminal 101, but is not limited thereto, or may also send the second instruction to other entities.

In some embodiments, the second instruction may be received by the terminal 101.

In step S6140, a third instruction is sent.

For optional implementations of step S6140, reference may be made to optional implementations of step S2140 in FIG. 2A, step S2240 in FIG. 2B, step S3140 in FIG. 3A, and other related parts in the embodiments involved in FIG. 2A, FIG. 2B, and FIG. 3A, which will not be repeated here.

In some embodiments, the network device 102 may send the third instruction to the terminal 101, but is not limited thereto, or may also send the third instruction to other entities.

In some embodiments, the third instruction may be received by the terminal 101.

The communication method involved in this embodiment of the present disclosure may include at least one of step S6110 to step S6140. For example, step S6110 may be implemented as an independent embodiment. For example, a combination of step S6110 and step S6120 may be implemented as an independent embodiment. For example, a combination of step S6110, step S6120, and step S6130 may be implemented as an independent embodiment. For example, a combination of step S6110, step S6120, and step S6140 may be implemented as an independent embodiment. It should be noted that possible independent embodiments formed by one or more steps in step S6110 to step S6140 are not limited to this.

In some embodiments, step S6120, step S6130, and step S6140 are optional, and one or more of these steps may be omitted or replaced in different embodiments.

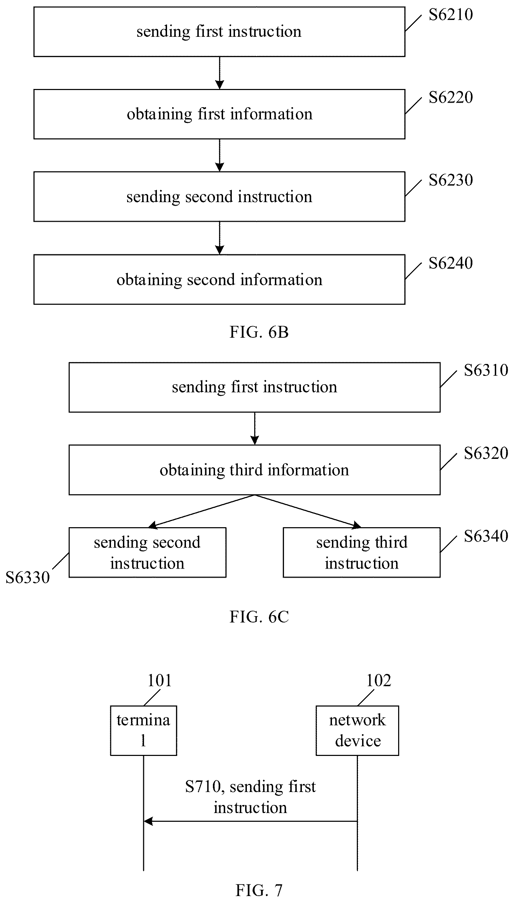

FIG. 6B is a flowchart illustrating an example of a communication method according to an embodiment of the disclosure. Embodiments of the present disclosure relate to a communication method, which is applied to a network device 102. As shown in FIG. 6B, the method includes step S6210 to step S6240.

In step S6210, a first instruction is sent.

For optional implementations of step S6210, reference may be made to optional implementations of step S3210 in FIG. 3B, and other related parts in the embodiments involved in FIG. 3B, which will not be repeated here.

In some embodiments, a network device 102 may send the first instruction to a terminal 101, but is not limited thereto, or may also send the first instruction to other entities.

In some embodiments, the first instruction may be received by the terminal 101.

In step S6220, first information is obtained.

For optional implementations of step S6220, reference may be made to optional implementations of step S3220 in FIG. 3B, and other related parts in the embodiments involved in FIG. 3B, which will not be repeated here.

In some embodiments, the network device 102 may receive the first information from the terminal 101, but is not limited thereto, or may also receive the first information from other entities.

In some embodiments, the first information may be sent by the terminal 101.

In step S6230, a second instruction is sent.

For optional implementations of step S6230, reference may be made to optional implementations of step S3230 in FIG. 3B, and other related parts in the embodiments involved in FIG. 3B, which will not be repeated here.

In some embodiments, the network device 102 may send the second instruction to the terminal 101, but is not limited thereto, or may also send the second instruction to other entities.

In some embodiments, the second instruction may be received by the terminal 101.

In step S6240, second information is obtained.

For optional implementations of step S6240, reference may be made to optional implementations of FIG. 3B, and other related parts in the embodiments involved in FIG. 3B, which will not be repeated here.

In some embodiments, the network device 102 receives the second information from the terminal 101, but is not limited thereto, or may also receive the second information from other entities.

In some embodiments, the second information may be sent by the terminal 101.

The communication method involved in this embodiment of the present disclosure may include at least one of step S6210 to step S6240. For example, step S6210 may be implemented as an independent embodiment. For example, a combination of step S6210, step S6220, step S6230, and step S6240 may be implemented as an independent embodiment. It should be noted that possible independent embodiments formed by one or more steps in step S6210 to step S6240 are not limited thereto.

In some embodiments, step S6220, step S6230, and step S6240 are optional, and one or more of these steps may be omitted or replaced in different embodiments.

FIG. 6C is a flowchart illustrating an example of a communication method according to an embodiment of the disclosure. Embodiments of the present disclosure relate to a communication method, which is applied to a network device 102. As shown in Fig. 6C, the method includes step S6310 to step S6350.

In step S6310, a first instruction is sent.

For optional implementations of step S6310, reference may be made to optional implementations of step S4110 in FIG. 4A and step S4210 in FIG. 4B, and other related parts in the embodiments involved in FIG. 4A and FIG. 4B, which will not be repeated here.

In some embodiments, the network device 102 may send the first instruction to a terminal 101, but is not limited thereto, or may also send the first instruction to other entities.

In some embodiments, the first instruction may be received by the terminal 101.

In step S6320, third information is obtained.

For optional implementations of step S6320, reference may be made to optional implementations of step S4130 in FIG. 4A and step S4230 in FIG. 4B, and other related parts in the embodiments involved in FIG. 4A and FIG. 4B, which may not be repeated here.

In some embodiments, the network device 102 may receive the third information from the terminal 101, but is not limited thereto, or may also receive the third information from other entities.

In some embodiments, the third information may be sent by the terminal 101.

In step S6330, a second instruction is sent.

For optional implementations of step S6330, reference may be made to optional implementations of step S4140 in FIG. 4A and step S4240 in FIG. 4B, and other related parts in the embodiments involved in FIG. 4A and FIG. 4B, which may not be repeated here.

In some embodiments, the network device 102 may send the second instruction to the terminal 101, but is not limited thereto, or may also send the second instruction to other entities.

In some embodiments, the second instruction may be received by the terminal 101.

In step S6340, a third instruction is sent.

For optional implementations of step S6340, reference may be made to optional implementations of step S4150 in FIG. 4A and step S4250 in FIG. 4B, and other related parts in the embodiments involved in FIG. 4A and FIG. 4B, which may not be repeated here.

In some embodiments, the network device 102 may send the third instruction to the terminal 101, but is not limited thereto, or may also send the third instruction to other entities.

In some embodiments, the third instruction may be received by the terminal 101.

The communication method involved in this embodiment of the present disclosure may include at least one of step S6310 to step S6340. For example, step S6310 may be implemented as an independent embodiment. For example, a combination of step S6310 and step S6320 may be implemented as an independent embodiment. For example, a combination of step S6310, step S6320, and step S6330 may be implemented as an independent embodiment. It should be noted that possible independent embodiments formed by one or more steps in step S6310 to step S6340 are not limited thereto.

In some embodiments, step S6320, step S6330, and step S6340 are optional, and one or more of these steps may be omitted or replaced in different embodiments.

FIG. 7 is a schematic diagram illustrating an interaction example of a communication method according to an embodiment of the disclosure. Embodiments of the present disclosure relate to a communication method. As shown in FIG. 7, the method includes step S710.

In step S710, a network device 102 sends a first instruction to a terminal 101.

For optional implementations of step S710, reference may be made to optional implementations of step S2110 in FIG. 2A, step S2210 in FIG. 2B, step S2310 in FIG. 2C, step S3110 in FIG. 3A, step S3210 in FIG. 3B, step S4110 in FIG. 4A, step S4210 in FIG. 4B, step S5110 in FIG. 5A, step S5210 in FIG. 5B, step S5310 in FIG. 5C, step S6110 in FIG. 6A, step S6210 in FIG. 6B, and step S6310 in FIG. 6C, and other related parts in the embodiments involved in FIG. 2A, FIG. 2B, FIG. 2C, FIG. 3A, FIG. 3B, FIG. 4A, FIG. 4B, FIG. 5A, FIG. 5B, FIG. 6A, and FIG. 6B, which will not be repeated here.

In some embodiments, the network device 102 may send the first instruction to the terminal 101, but is not limited thereto, or may also send the first instruction to other entities.

In some embodiments, the first instruction may be received by the terminal 101.

In the following, solutions of embodiments of the present disclosure are illustratively described in combination with various scenarios.

In a scenario of taking an inventory of large-scale goods, generally, what a network side needs to obtain is a serial number of goods.

In some embodiments, the following communication procedure may be implemented.

Step 1, a network device sends a first instruction. The first instruction is used to instruct a terminal to report a terminal number. The first instruction carries a first parameter (i.e., the fourth information). A first parameter is used to identify a communication procedure (e.g., the first parameter may be a session number).

Step 2, after receiving an instruction, the terminal reports the terminal number on a physical layer channel selected by itself or specified by the network device.

Step 3, the network device sends a second instruction to inform the terminal of whether the network device has correctly received information sent by the terminal (ACK or NACK).

Step 4, if the terminal receives NACK or does not receive NACK, it may jump to step 1, that is, the terminal may receive a new first instruction, which is used to instruct the terminal to report the terminal number. The new first instruction has the same first parameter as the first instruction (the first parameter being the same means that the first instruction and the new first instruction actually belong to the same communication procedure, that is, the first instruction and the new first instruction are instructions at different stages of the same communication procedure), then the terminal may send the terminal number again. If the terminal receives ACK, the current communication procedure ends, and no subsequent instructions with the same first parameter may be processed (at least for a period of time).

In some embodiments, steps 3 and 4 are not necessary, and only steps 1 and 2 may operate effectively. The network side may ensure reliability in other ways. For example, the numerical count of retransmissions is indicated in step 1, so that the terminal reports repeatedly a plurality of times. For another example, the network device may initiate step 1 the plurality of times, so that the terminal reports the plurality of times.

In some embodiments, after the terminal receives NACK in step 4, a channel used to send the terminal number again may be the same as or different from a channel used in step 2. In some embodiments, a channel used last time may have conflicted, so a different channel may be used.

For a sensor scenario, the network terminal needs to obtain a serial number of a sensor and its service information. For example, the service information may be temperature, humidity, speed and other service data measured by the sensor.

In some embodiments, the following communication procedure may be implemented.

Step 1, a network device sends a first instruction, which instructs the terminal to report service information of the terminal. The first instruction carries a first parameter. The first parameter is used to identify one communication procedure (for example, the first parameter may be a session number).

Step 2, after receiving the first instruction, the terminal reports a terminal number and the service information of the terminal on a physical layer resource selected by itself or specified by the network.

Step 3, the network terminal sends a second instruction to inform the terminal of whether the network side correctly receives the information sent by the terminal (ACK or NACK).

Step 4, if the terminal receives NACK or does not receive ACK, it may jump to step 1, that is, the terminal may receive a new first instruction, which is used to instruct the terminal to report the terminal number and the service information. The new first instruction has the same first parameter as the first instruction (the same first parameter is used to indicate that the new first instruction and the first instruction actually belong to the same communication procedure, that is, the new first instruction and the first instruction are instructions at different stages of the same communication procedure), then the terminal may send the terminal number and service information of the terminal again. If the terminal receives ACK, the current communication procedure ends, and no subsequent instructions with the same first parameter may be processed (at least for a period of time).

In some embodiments, step 1 and step 2 are not necessary, and only step 1 and step 2 may also operate effectively.

In some embodiments, the following communication procedure may be implemented.

Step 1, a network terminal sends a first instruction, which instructs a terminal to report a terminal number. The first instruction carries a first parameter (same as explained above).

Step 2, after receiving the first instruction, the terminal reports the terminal number on a physical layer resource selected by itself or specified by the network device.

Step 3, the network device sends a second instruction to inform the terminal of whether the network terminal correctly receives information sent by the terminal (ACK or NACK).

Step 4, if receiving ACK, the terminal reports service information in the same physical layer resource as used in step 2. The communication procedure ends. The terminal may not process subsequent instructions with the same first parameter (at least for a period of time).

If the terminal does not receive the second instruction in step 3 or the second instruction is NACK, it may jump to step 1, that is, the terminal receives a new first instruction. The new first instruction is used to instruct the terminal to report the terminal number and service information. The new first instruction has the same first parameter as the first instruction (the same first parameter is used to indicate that the new first instruction and the first instruction actually belong to the same communication procedure, that is, the new first instruction and the first instruction are instructions at different stages of the same communication procedure), then the terminal may send the terminal number of the terminal again.

A difference between the above two methods is whether the terminal number and the service information are sent together or sent separately. The two communication methods have some differences in communication efficiency.

In some embodiments, for a scenario where a network device communicates with a plurality of terminals, resources used by the terminals are selected from a resource pool shared by the plurality of terminals, and the resources of the plurality of terminals may conflict. When a total size of the resource pool and a numerical count of terminals are the same, the method for sending the terminal number and the service information separately may reduce a probability of conflict. Since in a case where only the terminal number or only the service information is sent, more channels may be divided in the resource pool compared to a case where the terminal number and the service information are sent together, thus reducing the probability of conflict.

In a scenario where the network device communicates with a single terminal, the resource used by the terminal may be specified by the network or selected from the resource pool, and resource conflicts generally do not occur. In this case, putting the terminal number and the service information together helps reduce a process step and shorten a communication delay.

For a scenario where the terminal performs an operation (e.g., the network device writes/deletes/modifies information in the terminal), the network device only needs to let the terminal perform the corresponding operation to achieve the purpose.

In some embodiments, the following communication procedure may be implemented.

Step 1, a network device sends a first instruction, and the first instruction instructs a terminal to perform a corresponding operation.

Step 2, after receiving the first instruction, the terminal performs a corresponding operation as required.

Step 3, the terminal sends a terminal number and control information (including successful execution, unsuccessful execution, and further reporting of a cause for failure) to the network device.

In some embodiments, step 3 is not necessary. Only step 1 and step 2 may also operate. The network device may ensure reliability by sending the first instruction through step 1 a plurality of times.

The first instruction includes a first parameter. For the terminal that has fed back successful execution in step 3, no processing is performed (at least for a period of time) on the instruction carrying the same first parameter that indicates execution of the corresponding operation.

In embodiments of the disclosure, some or all steps and their optional implementations may be arbitrarily combined with some or all steps in other embodiments, and may also be arbitrarily combined with optional implementations of other embodiments.

Embodiments of the disclosure also provide an apparatus for implementing any one of the above methods. For example, an apparatus is provided, the apparatus includes units or modules for performing the steps executed by the terminal in any one of the above methods. In this case, the apparatus may be configured in the terminal. Furthermore, another apparatus is provided, the apparatus includes units or modules for performing the steps executed by the network device in any one of the above methods. In this case, the apparatus may be configured in the network device.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

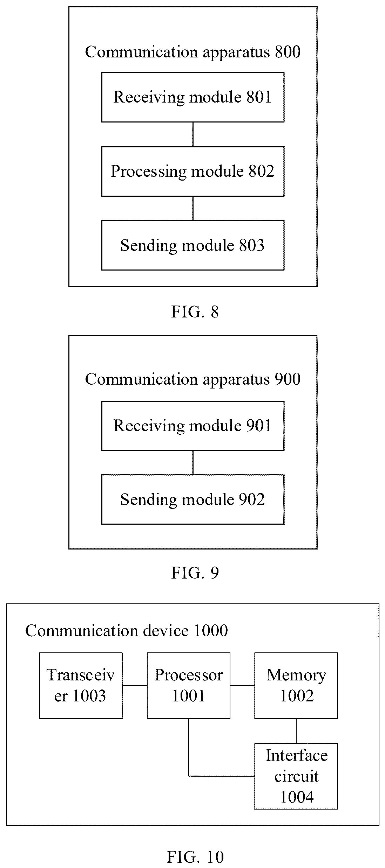

FIG. 8 is a schematic diagram illustrating a structure example of a communication apparatus according to an embodiment of the disclosure. The apparatus may be provided in a terminal 101. The apparatus may include a receiving module 801, a processing module 802, and a sending module 803.

In some embodiments, the receiving module 801 may be used to perform at least one of steps related to reception- (e.g., step S2110, step S2130, step S2140, step S2210, step S2230, step S2240, step S2310, step S2330, step S2350, step S3110, step S3130, step S3140, step S3210, step S3230, step S4110, step S4140, step S4150, step S4210, step S4240, step S4250, but is not limited thereto) performed by the terminal 101 in any of the above methods.

In some embodiments, the processing module 302 may be configured to execute at least one of steps related to processing (e.g., step S4120, step S4220, but is not limited thereto) performed by the terminal 101 in any of the above methods.

In some embodiments, the sending module 803 may be used to execute at least one of steps related to sending (e.g., step S2120, step S2220, step S2320, step S2340, step S2360, step S3120, step S3220, step S3240, step S4130, step S4230, but is not limited thereto) performed by the terminal 101 in any of the above methods.

FIG. 9 is a schematic diagram illustrating a structure example of a communication apparatus according to an embodiment of the disclosure. The apparatus may be provided in a network device 102. The apparatus may include a receiving module 901 and a sending module 902.

In some embodiments, the receiving module 901 may be used to execute at least one of steps related to reception- (e.g., step S2120, step S2220, step S2320, step S2340, step S2360, step S3120, step S3220, step S3240, step S4130, step S4230, but is not limited thereto) performed by the network device 102 in any of the above methods.

In some embodiments, the sending module 902 may be used to execute at least one of steps related to sending (e.g., step S2110, step S2130, step S2140, step S2210, step S2230, step S2240, step S2310, step S2330, step S2350, step S3110, step S3130, step S3140, step S3210, step S3230, step S4110, step S4140, step S4150, step S4210, step S4240, step S4250, but is not limited thereto) performed by the network device 102 in any of the above methods.

In some embodiments, the receiving module and the sending module may be integrated. For example, the receiving module and the sending module may both be included in a transceiver module. The transceiver module may implement functions of at least one of the receiving module or the sending module.

FIG. 10 is a schematic diagram illustrating a structure example of a communication device according to an embodiment of the disclosure. The communication device 1000 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 1000 may be configured to implement the method in the above method embodiments. For details, reference may be made to the description in the above method embodiments.

As shown in FIG. 10, the communication device 1000 may include one or more processors 1001. The processor 1001 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU, or CU, etc.), execute a computer program, and process data of the computer program. The communication device 1000 is configured to execute any one of the above methods.

In some embodiments, the communication device 1000 may also include one or more memories 1002 for storing instructions. Optionally, all or some of the memories 1002 may also be located outside the communication device 1000.

In some embodiments, the communication device 1000 further includes one or more transceivers 1003. When the communication device 1000 includes one or more transceivers 1003, the transceiver 1003 performs at least one of the communication steps such as sending and/or receiving in the above method, and the processor 1001 performs at least one of other steps.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 1000 further includes one or more interface circuits 1004. The interface circuit 1004 is connected to the memory 1002. The interface circuit 1004 may be configured to receive signals from the memory 1002 or other devices, and may be configured to send the signals to the memory 1002 or other devices. For example, the interface circuit 1004 may read instructions stored in the memory 1002 and send the instructions to the processor 1001.

The communication device 1000 described in the above embodiments may be a network device or a terminal, but the scope of the communication device 1000 described in the disclosure is not limited, and a structure of the communication device 1000 may not be limited by FIG. 10. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

The disclosure also provides a storage medium for storing instructions. When the instructions are running on the communication device 1000, the communication device 1000 is caused to implement any one of the above methods. In an example, the above storage medium is an electronic storage medium. In an example, the above storage medium is a computer-readable storage medium, which is not limited herein. The above storage medium may also be a storage medium readable by other devices. In an example, the above storage medium may be a non-transitory storage medium, which is not limited to herein. The above storage medium may also be a transitory storage medium.

The disclosure also provides a program product. When the program product is executed by the communication device 1000, the communication device 1000 is caused to implement any one of the above methods. In an example, the above program product is a computer program product.

The disclosure also provides a computer program. When the computer program is running on a computer, the computer is caused to implement any one of the above methods.

Other implementations of the disclosure will be apparent to the skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

## Claims

1. A communication method, comprising:
receiving a first instruction, wherein the first instruction is configured to instruct a terminal to perform at least one of: sending information, or performing a first operation;
wherein the terminal is of ambient Internet of Things (IoT) type.

2. The method according to claim 1, wherein after receiving the first instruction, the method further comprises:
sending first information according to the first instruction, wherein the first information comprises at least one of: identification information or service data of the terminal, the identification information is configured to identify the terminal, and the service data is data acquired by the terminal.

3. The method according to claim 2, wherein sending the first information according to the first instruction comprises:
repeatedly sending the first information according to the first instruction.

4. The method according to claim 3, wherein repeatedly sending the first information is performed by at least one of:
repeatedly sending in a plurality of time domain channels;
repeatedly sending in a plurality of frequency domain channels; or
repeatedly sending in a plurality of code domain channels.

5. The method according to any one of claims 2 to 4, wherein a plurality of first instructions are received;
sending the first information according to the first instruction comprises:
sending the first information at least once according to the plurality of first instructions.

6. The method according to any one of claims 2 to 5, wherein after sending the first information according to the first instruction, the method further comprises:
receiving a second instruction, wherein the second instruction indicates that the first information is successfully received.

7. The method according to claim 6, wherein after receiving the second instruction, the method further comprises:
sending second information, wherein the second information comprises the service data of the terminal, and the service data is the data acquired by the terminal.

8. The method according to claim 7, wherein transmission of the second instruction and transmission of the first instruction are performed via the same channel.

9. The method according to any one of claims 1 to 8, wherein after receiving the first instruction, the method further comprises:
performing the first operation according to the first instruction.

10. The method according to claim 9, wherein the first operation comprises at least one of: data writing, data deleting, or data modifying.

11. The method according to claim 9 or 10, wherein, after performing the first operation according to the first instruction, the method further comprises:
sending third information, wherein the third information indicates an execution result of the first operation.

12. The method according to claim 9, wherein after sending the third information, the method further comprises:
receiving a second instruction, wherein the second instruction indicates that the third information is successfully received.

13. The method according to any one of claims 6, 7, 8, and 12, wherein the first instruction comprises fourth information, and the fourth information comprises an index for an interaction between the terminal and a network device;
wherein after receiving the second instruction, the terminal does not respond to another first instruction with an index having the same value as the index for the first instruction within a first time period.

14. The method according to any one of claims 1 to 12, wherein the first instruction comprises fourth information, and the fourth information comprises an index for an interaction between the terminal and a network device.

15. A communication method, comprising:
sending a first instruction, wherein the first instruction is configured to instruct a terminal to perform at least one of: sending information reporting, or performing a first operation;
wherein the terminal is of ambient Internet of Things (IoT) type.

16. The method according to claim 15, wherein after sending the first instruction, the method further comprises:
receiving first information, wherein the first information comprises at least one of: identification information or service data of the terminal, the identification information is configured to identify the terminal, and the service data is data acquired by the terminal.

17. The method according to claim 16, wherein receiving the first information comprises:
receiving repeatedly sent first information.

18. The method according to claim 17, wherein receiving the first information is performed by at least one of:
repeatedly receiving in a plurality of time domain channels;
repeatedly receiving in a plurality of frequency domain channels; or
repeatedly receiving in a plurality of code domain channels.

19. The method according to any one of claims 16 to 18, wherein a plurality of first instructions are sent;
receiving the first information from the terminal comprises:
receiving the first information sent at least once.

20. The method according to any one of claims 16 to 19, wherein after receiving the first information, the method further comprises:
sending a second instruction, wherein the second instruction indicates that the first information is successfully received.

21. The method according to claim 20, wherein after sending the second instruction, the method further comprises:
receiving second information, wherein the second information comprises the service data of the terminal, and the service data is the data acquired by the terminal.

22. The method of claim 21, wherein transmission of the second instruction and transmission of the first instruction are performed via the same channel.

23. The method according to any one of claims 15 to 22, wherein after sending the first instruction, the method further comprises:
receiving third information, wherein the third information indicates an execution result of the first operation.

24. The method according to claim 23, wherein after receiving the third information, the method further comprises:
sending a second instruction, wherein the second instruction indicates that the third information is successfully received.

25. The method according to any one of claims 15 to 24, wherein the first instruction comprises fourth information, and the fourth information comprises an index for an interaction between the terminal and a network device.

26. A terminal, comprising:
a receiving module, configured to receive a first instruction, wherein the first instruction is configured to instruct the terminal to perform at least one of: sending information, or performing a first operation;
wherein the terminal is of ambient Internet of Things (IoT) type.

27. A network device, comprising:
a sending module, configured to send a first instruction, wherein the first instruction is configured to instruct a terminal to perform at least one of: sending information, or performing a first operation;
wherein the terminal is of ambient Internet of Things (IoT) type.

28. A terminal, comprising:
at least one processor;
wherein the terminal is configured to perform the method according to any one of claims 1 to 14.

29. A network device, comprising:
at least one processor;
wherein the network device is configured to perform the method according to any one of claims 15 to 25.

30. A communication system comprising a terminal and a network device, wherein the terminal is configured to implement the method according to any one of claims 1 to 14, and the network device is configured to implement the method according to any one of claims 15 to 25.

31. A storage medium having instructions stored thereon, wherein, when the instructions are performed by a processor, the method according to any one of claims 1 to 25 is performed.
